# EUROPEAN PATENT APPLICATION

(11) **EP 3 412 934 A1**
(43) Date of publication of application: **12.12.2018**
(21) Application number: 17856366.4
(22) Date of filing: 28.09.2017
(51) Int. Cl.: F16H 57/031, F16C 33/78, F16J 15/447

(54) **POWER TRANSMISSION DEVICE**

(30) Priority: 28.09.2016 JP 2016189235
(71) Applicant: Komatsu Ltd., Minato-ku Tokyo 107-8414 (JP)
(72) Inventor: TORISU, Hironori, Tokyo 107-8414 (JP); YAMAGUCHI, Eiji, Tokyo 107-8414 (JP); KOBAYASHI, Junichi, Tokyo 107-8414 (JP)
(74) Representative: Flügel Preissner Schober Seidel
(86) International application number: PCT/JP2017/035315
(87) International publication number: WO 2018/062417

(57) **Abstract**

A transmission (9) comprises an output shaft (10), a transmission case (20), an annular inner cover (41), and an annular outer cover (42). The transmission case (20) rotatably supports the output shaft (10). The inner cover (41), is attached to the output shaft (10). The inner cover (41) is disposed between the output shaft (10) and the transmission case (20) in the radial direction. The outer cover (42) is attached to the output shaft (10). The outer cover (42) is disposed on the outside of the inner cover (41) in the axial direction.

## Description

### TECHNICAL FIELD

The present invention relates to a power transmission device.

### BACKGROUND ART

With a conventional work vehicle such as a wheel loader or a wheeled excavator, a sealing device is provided in the gap between the transmission case and the output shaft, or the gap between the axle case and the propeller shaft, in order to help keep soil, mud, and the like (hereinafter collectively referred to as "foreign matter") from coming in from the outside.

In Patent Literature 1 is proposed a sealing device having a labyrinth structure configured such that a plurality of fixed-side annular bodies attached to a bearing case and a plurality of rotation-side annular bodies attached to a rotary shaft attached are alternately incorporated. With this sealing device, even if foreign matter gets in, it is discharged to the outside by the centrifugal force that accompanies the rotation of the rotation-side annular bodies.

### CITATION LIST

### PATENT LITERATURE

[Patent Literature 1] Japanese Laid-Open Utility Model Application S63-128320

### SUMMARY

### TECHNICAL PROBLEM

However, with the sealing device described in Patent Literature 1, foreign matter that is flung off by the rotation-side annular bodies tends to build up in the gaps between the fixed-side annular bodies, so there is a need for a way to discharge this foreign matter more effectively.

The present invention was conceived in light of the above situation, and it is an object thereof to provide a power transmission device with which foreign matter can be efficiently discharged.

### SOLUTION TO PROBLEM

The power transmission device pertaining to a first mode comprises a rotary shaft, a bearing case, an annular inner cover, and an annular outer cover. The bearing case rotatably supports the rotary shaft. The annular inner cover is attached to the rotary shaft and is disposed between the rotary shaft and the bearing case in the radial direction of the rotary shaft. The annular outer cover is attached to the rotary shaft and is disposed on the outside of the inner cover in the axial direction.

With the power transmission device pertaining to the first mode, since the inner cover and outer cover rotate along with the rotary shaft, even if foreign matter should work its way in between the inner cover and the outer cover, this foreign matter can be efficiently discharged to the outside by the rotational force of the inner cover and outer cover.

The power transmission device pertaining to a second mode is the power transmission device pertaining to the first mode, wherein the bearing case has a case body and an annular projecting portion that projects in the axial direction from the case body. The outer end portion of the inner cover in the radial direction is adjacent to the inner peripheral face of the projecting portion in the radial direction. The outer end portion of the outer cover in the radial direction is adjacent to the outer peripheral face of the projecting portion in the radial direction.

With the power transmission device pertaining to the second mode, foreign matter will be less likely to come in through the gap between the outer cover and the projecting portion, and foreign matter will also be less likely to come in through the gap between the inner cover and the projecting portion.

The power transmission device pertaining to a third mode is the power transmission device pertaining to the second mode, wherein the outer end portion of the inner cover in the radial direction is inclined toward the outside in the axial direction closer to the inner peripheral surface of the projecting portion.

With the power transmission device pertaining to the third mode, foreign matter is flung away from the gap between the inner cover and the projecting portion by the outer end portion of the rotating inner cover, so it is less likely that foreign matter will get in.

The power transmission device pertaining to the fourth mode is the power transmission device pertaining to the second or third mode, wherein the width of the gap between the projecting portion and the inner cover in the radial direction is no more than 1/10 the overall width of the inner cover in the radial direction.

With the power transmission device pertaining to the fourth mode, the gap between the inner cover and the projecting portion can be made narrow enough to make it less likely that foreign matter will get in.

The power transmission device pertaining to the fifth mode is the power transmission device pertaining to any of the second to fourth modes, wherein the inner peripheral face of the projecting portion in the radial direction is parallel to the axial direction.

With the power transmission device pertaining to the fifth mode, even if the entire rotary shaft should oscillate in the axial direction, the inner cover will be inhibited from clashing with the protruding portion.

The power transmission device pertaining to the sixth mode is the power transmission device pertaining to any of the second to fifth modes, wherein the projecting portion is opposite to and a specific distance away from the outer end portion of the outer cover in the radial direction. The width of the gap between the projecting portion and the outer end portion of the outer cover in the radial direction is no more than 1/20 the overall length of the projecting portion in the axial direction.

With the power transmission device pertaining to the sixth mode, the gap between the outer cover and the projecting portion can be made narrow enough to make it less likely that foreign matter will get in.

The power transmission device pertaining to the seventh mode is the power transmission device pertaining to any of the second to sixth modes, wherein the outer peripheral face of the projecting portion in the radial direction is parallel to the axial direction.

With the power transmission device pertaining to the seventh mode, even if the entire rotary shaft should oscillate in the axial direction, the outer cover will be inhibited from clashing with the protruding portion.

### ADVANTAGEOUS EFFECTS

The present invention provides a power transmission device with which foreign matter can be discharged with a simple configuration.

### BRIEF DESCRIPTION OF DRAWINGS

[FIG. 1] FIG. 1 is a side view of a wheel loader in an embodiment.
[FIG. 2] FIG. 2 is a cross section of a transmission in this embodiment.
[FIG. 3] FIG. 3 is a detail view of FIG. 2.
[FIG. 4] FIG. 4 is a detail view of FIG. 3.

### DESCRIPTION OF EMBODIMENTS

### Configuration of Wheel Loader 1

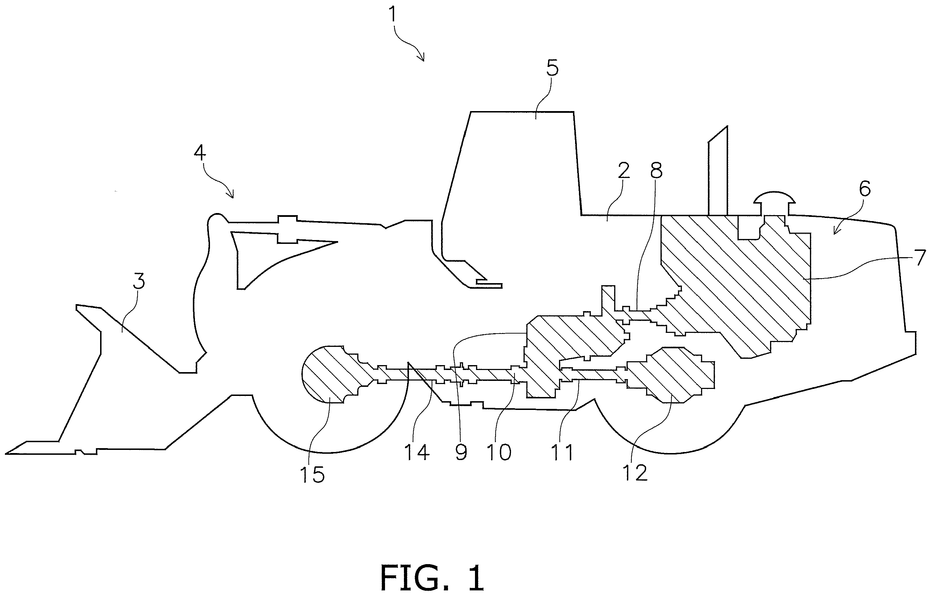

FIG. 1 is a side view of a wheel loader 1 in an embodiment. FIG. 1 shows the power transmission system of the wheel loader 1 as a simplified see-through view. In the following description, "front" and "rear" are the same as the "front" and "rear" as seen by the operator seated in the driver's seat.

The wheel loader 1 comprises a body 2, a bucket 3, a working implement drive mechanism 4, and a cab 5. The body 2 consists of a front body and a rear body. A bucket 3 used for excavation and loading is attached to the front of the body 2 via the hydraulic working implement drive mechanism 4. The working implement driving mechanism 4 is constituted by a boom, a bell crank, a connecting link, a bucket cylinder, a boom cylinder, and so forth.

A box-shaped cab 5 in which an operator sits is disposed on the body 2. An engine compartment 6 is provided at the rear end portion of the body 2. The engine compartment 6 houses an engine 7 as a power source. In this embodiment, the crankshaft (not shown) of the engine 7 is laid out longitudinally.

Power from the engine 7 is transmitted to the transmission 9 via a propeller shaft 8. Some of the power outputted from the transmission 9 is transmitted to a rear drive shaft 11 via an output shaft 10. The power transmitted to the rear drive shaft 11 is transmitted to the rear wheels via a rear axle 12. Some of the power outputted from the transmission 9 is transmitted to a front drive shaft 14 via the output shaft 10. The power transmitted to the front drive shaft 14 is transmitted to the front wheels via a front axle 15.

In this embodiment, the transmission 9, the output shaft 10, the rear drive shaft 11, the rear axle 12, the front drive shaft 14, and the front axle 15 constitute the "power transmission device" pertaining to this embodiment.

### Configuration of Transmission 9

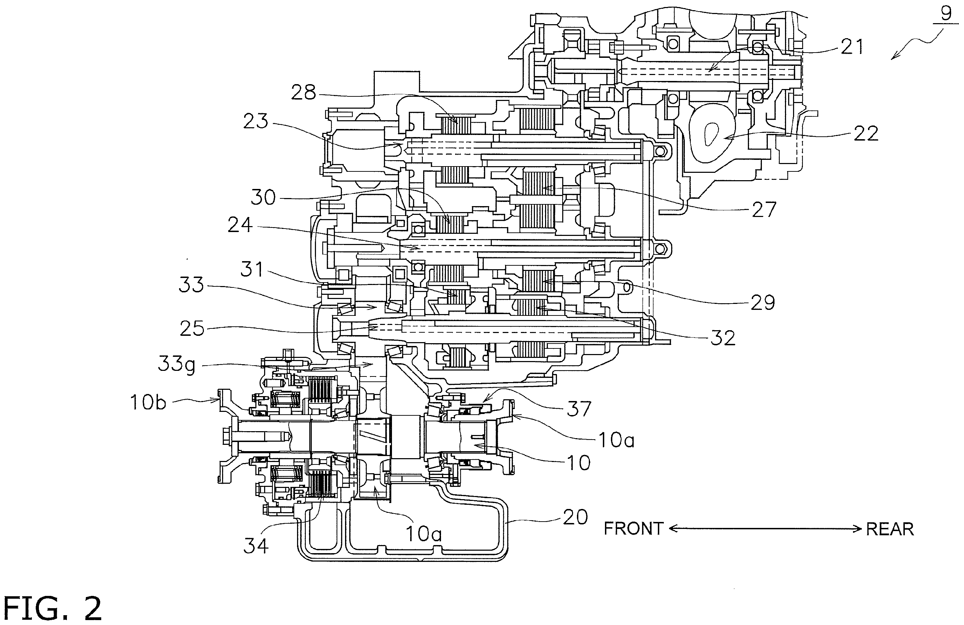

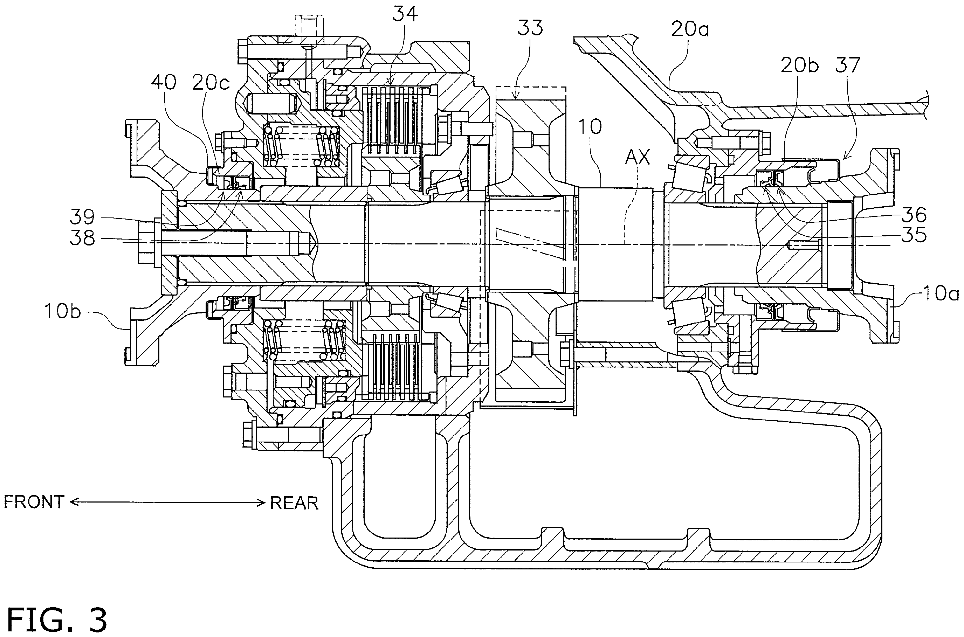

FIG. 2 is a cross section of the overall configuration of the transmission 9 in this embodiment. FIG. 3 is a detail view of FIG. 2.

The transmission 9 comprises a transmission case 20 , an input shaft 21, a torque converter 22, a first intermediate shaft 23, a second intermediate shaft 24, a third intermediate shaft 25, and the output shaft 10.

The transmission case 20 houses the input shaft 21, the torque converter 22, the first intermediate shaft 23, the second intermediate shaft 24, the third intermediate shaft 25, and the output shaft 26. The transmission case 20 is an example of the "bearing case" in this embodiment. The output shaft 10 is an example of the "rotary shaft" in this embodiment.

The power from the engine 7 is inputted to the input shaft 21 via the torque converter 22. The first intermediate shaft 23 is provided with a front clutch 27 and a first clutch 28. The second intermediate shaft 24 is provided with a rear clutch 29 and a second clutch 30. The third intermediate shaft 25 is provided with a third clutch 31 and a fourth clutch 32. A transfer shaft 33 is linked to the front end portion of the third intermediate shaft 25. The transfer shaft 33 is provided with a transfer gear 33g.

Power is transmitted from the transfer shaft 33 to the output shaft 10. The output shaft 10 is provided with an output gear 10g that meshes with a transfer gear 33a, and a parking brake 34.

The output shaft 10 is disposed longitudinally. The rear end portion of the output shaft 10 protrudes rearward from the transmission case 20. The front end portion of the output shaft 10 protrudes forward from the transmission case 20. As shown in FIG. 3, the output shaft 10 is supported by the transmission case 20. The output shaft 10 is able to rotate around an axis AX.

The rear end portion of the output shaft 10 is provided with a rear coupling 10a to which the front end portion of the rear drive shaft 11 is linked. The front end portion of the output shaft 10 is provided with a front coupling 10b to which the rear end portion of the front drive shaft 14 is linked.

As shown in FIG. 3, the transmission case 20 has a case main body 20a, a rear projecting portion 20b (an example of a "projecting portion"), and a front projecting portion 20c. The case main body 20a houses the middle portion of the output shaft 10 in the axial direction. The axial direction is a direction parallel to the axis AX of the output shaft 10. The rear projecting portion 20b projects rearward from the case main body 20a. The rear projecting portion 20b is formed in an annular shape with the axis AX at the center. The front protruding portion 20c projects forward from the case body 20a. The front projecting portion 20c is formed in an annular shape with the axis AX at the center.

A rear oil seal 35 and a rear dust seal 36 are disposed between the output shaft 10 and the rear projecting portion 20b of the transmission case 20. The rear oil seal 35 and the rear dust seal 36 are each formed in an annular shape with the axis AX at the center. An ordinary oil seal and dust seal can be used for the rear oil seal 35 and the rear dust seal 36, respectively.

An annular labyrinth structure 37 that covers the portion of the transmission case 20 on the outside of the rear projecting portion 20b in the axial direction is attached to the output shaft 10. The labyrinth structure 37 makes it less likely that soil, mud, or the like (hereinafter referred to as "foreign matter") will get into the interior of the transmission case 20 from between the output shaft 10 and the rear projecting portion 20b of the transmission case 20. The configuration of the labyrinth structure 37 will be described below.

A front oil seal 38 and a front dust seal 39 are disposed in the gap between the output shaft 10 and the front protruding portion 20c of the transmission case 20. The front oil seal 38 and the front dust seal 39 are each formed in an annular shape with the axis AX at the center. An ordinary oil seal and dust seal can be used for the front oil seal 38 and the front dust seal 39, respectively.

An annular seal cover 40 that covers the portion of the transmission case 20 on the outside of the front projecting portion 20c in the axial direction is attached to the output shaft 10. The seal cover 40 makes it less likely that foreign matter will get into the interior of the transmission case 20 from between the output shaft 10 and the front protruding portion 20c of the transmission case 20.

### Configuration of Labyrinth Structure 37

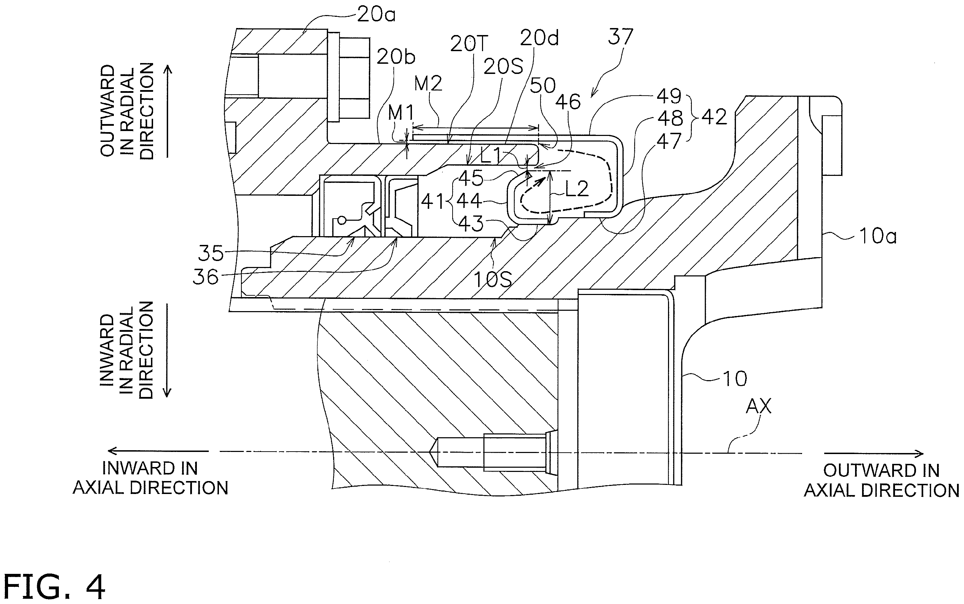

The labyrinth structure 37 attached to the output shaft 10 will now be described. FIG. 4 is a detail view of FIG. 3. The labyrinth structure 37 is constituted by the inner cover 41 and the outer cover 42.

### 1. Inner Cover 41

The inner cover 41 is formed in an annular shape with the axis AX at the center. The inner cover 41 is attached to the outer peripheral face 10S of the output shaft 10. The inner cover 41 rotates around the axis AX along with the output shaft 10. The inner cover 41 is disposed inside the outer cover 42 in the axial direction. The inner cover 41 is disposed between the output shaft 10 and the rear projecting portion 20b of the transmission case 20 in the radial direction of the output shaft 10. The radial direction is a direction perpendicular to the axis AX of the output shaft 10. The inner cover 41 covers the outside of the rear oil seal 35 and the rear dust seal 36 in the axial direction.

The inner cover 41 has a press-fit portion 43, an extension 44, and an outer end portion 45. In this embodiment, the cross sectional shape of the inner cover 41 is substantially C-shaped.

The press-fit portion 43 is formed in a cylindrical shape with the axis AX at the center. The press-fit portion 43 extends along the axial direction. The press-fit portion 43 is press-fitted to the output shaft 10.

The extension 44 is continuous with the inner end of the press-fit portion 43 in the axial direction. The extension 44 is formed in the shape of a perforated disk with the axis AX at the center. The extension 44 extends along the radial direction. The extension 44 is opposite the rear dust seal 36 in the axial direction.

The outer end portion 45 is the part of the inner cover 41 located on outermost side in the radial direction. The outer end portion 45 is continuous with the outer end of the extension 44 in the radial direction. The outer end portion 45 is inclined with respect to the extension 44. The outer end portion 45 tilts outward in the axial direction moving toward the inner peripheral face 20S of the rear projecting portion 20b of the transmission case 20. The outer end portion 45 extends in a direction that is inclined with respect to both the radial direction and the axial direction. In this embodiment, the outer end portion 45 extends toward the distal end of the rear projecting portion 20b.

The distal end of the outer end portion 45 is adjacent to the inner peripheral face 20S of the rear projecting portion 20b. The distal end of the outer end portion 45 is separated from the inner peripheral face 20S of the rear projecting portion 20b. An inner gap 46 is formed between the distal end of the outer end portion 45 and the inner peripheral face 20S of the rear projecting portion 20b. There are no particular restrictions on the length L1 of the gap 46 in the radial direction, but it is preferably no more than 1/10 the overall width L2 of the inner cover 41 in the radial direction, and preferably at least 1/15 the overall width L2 of the inner cover 41.

Here, the inner peripheral face 20S of the rear projecting portion 20b of the transmission case 20 is parallel to the axial direction. Therefore, even when the entire output shaft 10 oscillates in the axial direction, the outer end portion 45 of the inner cover 41 will be inhibited from clashing with the rear protruding portion 20b.

### 2. Outer Cover 42

The outer cover 42 is formed in an annular shape with the axis AX at the center. The outer cover 42 is attached to the outer peripheral face 10S of the output shaft 10. The outer cover 42 rotates around the axis AX along with the output shaft 10. The outer cover 42 is disposed on the outside of the inner cover 41 in the axial direction. Outer cover 42 is disposed on the outside of the rear oil seal 35 and the rear dust seal 36 in the axial direction. The outer cover 42 covers the outside of the rear projecting portion 20b in the radial direction.

The outer cover 42 has a press-fit portion 47, an extension 48, and an outer end portion 49. In this embodiment, the cross sectional shape of the outer cover 42 is substantially L-shaped.

The press-fit portion 47 is formed in a cylindrical shape with the axis AX at the center. The press-fit portion 47 extends along the axial direction. The press-fit portion 47 is press-fitted to the output shaft 10.

The extension 48 is continuous with the outer end of the press-fit portion 47 in the axial direction. The extension 48 is formed in the shape of a perforated disk with the axis AX at the center. The extension 48 extends along the radial direction. The extension 48 extends more to the outside than the rear projecting portion 20b of the transmission case 20 in the radial direction. The extension 48 is opposite the extension 44 and the outer end portion 45 of the inner cover 41 in the axial direction.

The outer end portion 49 is the part of the outer cover 42 located on outermost side in the radial direction. The outer end portion 49 is formed in a cylindrical shape with the axis AX at the center. The outer end portion 49 is disposed more to the outside than the rear projecting portion 20b of the transmission case 20 in the radial direction. The outer end portion 49 is bent by about 90 degrees with respect to the extension 48.

The outer end portion 49 is adjacent to the outer peripheral face 20T of the rear projecting portion 20b. The outer end portion 49 is separated from the outer peripheral face 20T of the rear projecting portion 20b. The rear projecting portion 20b of the transmission case 20 includes a opposing portion 20d that is opposite the outer end portion 49 in the radial direction. The outer end portion 49 extends along the opposing portion 20d. The outer end portion 49 is parallel to the opposing portion 20d.

An outer gap 50 is formed between the outer end portion 49 and the opposing portion 20d. There are no particular restrictions on the distance M1 of the outer gap 50 in the radial direction, but it is preferably no more than 1/20 and preferably at least 1/30 the overall length M2 of the opposing portion 20d in the radial direction.

Here, the outer peripheral face 20T of the rear projecting portion 20b of the transmission case 20 is parallel to the axial direction. Therefore, even when the entire output shaft 10 oscillates in the axial direction, the outer end portion 49 of the outer cover 42 will be inhibited from clashing with the rear projecting portion 20b.

### Features

(1) The transmission 9 comprises the output shaft 10, the transmission case 20, the annular inner cover 41, and the annular outer cover 42. The transmission case 20 supports the output shaft 10 rotatably around the axis AX. The inner cover 41 is attached to the output shaft 10. The inner cover 41 is disposed between the output shaft 10 and the transmission case 20 in the radial direction. The outer cover is attached to the output shaft 10. The outer cover 42 is disposed on the outside of the inner cover 41 in the axial direction.
   Since the inner cover 41 and outer cover 42 rotate along with the output shaft 10, even if foreign matter works its way in between the inner cover 41 and outer cover 42 as indicated by the dotted arrow in FIG. 4, the foreign matter can be efficiently discharged to the outside by the rotational force of the inner cover 41 and the outer cover 42.
(2) The transmission case 20 has the case main body 20a and the annular rear projecting portion 20b that projects in the axial direction from the case main body 20a. The outer end portion 45 of the inner cover 41 in the radial direction is adjacent to the inner peripheral face 20S of the rear projecting portion 20b in the radial direction. The outer end portion 49 of the outer cover 42 in the radial direction is adjacent to the outer peripheral face 20T of the rear projecting portion 20b in the radial direction.
   Therefore, foreign matter will be less likely to get in from the gap 50 between the rear projecting portion 20b and the outer cover 42, and foreign matter will also be less likely to get in from the inner gap 46 between the rear projecting portion 20b and the inner cover 41.
(3) The outer end portion 45 of the inner cover 41 in the radial direction is inclined outward in the axial direction closer to the inner peripheral face 20S of the rear projecting portion 20b.
   Therefore, the outer end portion 45 of the cover 41 to rotate can fling off foreign object away from the inner gap 46, which further suppresses the entry of foreign matter from the inner gap 46.
(4) In the radial direction, the rear projecting portion 20b is separated from the inner cover 41, and the length L1 of the inner gap 46 between the rear projecting portion 20b and the inner cover 41 in the radial direction is no more than 1/10 the overall length L2 of the inner cover 41 in the radial direction.
   Consequently, the inner gap 46 can be made narrow enough to further suppress the entry of foreign matter from the inner gap 46.
(5) The inner peripheral face 20S of the rear projecting portion 20b in the radial direction is parallel to the axial direction. Therefore, even if the entire output shaft 10 oscillates in the axial direction, the inner cover 41 can be inhibiting from clashing with the rear projecting portion 20b.
(6) The rear projecting portion 20b is opposite the outer end portion 49 of the outer cover 42 with a specific spacing in between in the radial direction. The length M1 of the outer gap 50 between the rear projecting portion 20b and the outer end portion 49 of the outer cover 42 in the radial direction is no more than 1/20 the overall length M2 of the rear projecting portion 20b in the axial direction.
   Consequently, it is possible to narrow the outer gap 50 enough to further suppress the entry of foreign matter from the outer gap 50.
(7) The outer peripheral face 20T of the rear projecting portion 20b in the radial direction is parallel to the axial direction. Therefore, even if the entire output shaft 10 oscillates in the axial direction, the outer cover 42 can be inhibited from clashing with the rear projecting portion 20b.

### Other Embodiments

The present invention is not limited to or by the above embodiment, and various modifications or revisions can be made without departing from the scope of the present invention.

The above embodiment describes a case in which the labyrinth structure 37 pertaining to the present invention is applied between the output shaft 10 and the transmission case 20, but this is not the only option. The labyrinth structure 37 pertaining to the present invention is widely applicable between a rotary shaft and a bearing case in a power transmission device. For example, the labyrinth structure 37 pertaining to the present invention can be applied between the front drive shaft 14 and the front axle 15, between the rear drive shaft 11 and the rear axle 12, and so on.

The above embodiment describes a case in which the labyrinth structure 37 pertaining to the present invention is applied to the power transmission device of a wheel loader, but this is not the only option. The labyrinth structure 37 pertaining to the present invention is widely applicable, not only to a work vehicle such as a motor grader or a dumper truck, but also to a power transmission device in a passenger car, a motorcycle, or the like.

In the above embodiment, the inner cover 41 was press-fitted to the output shaft 10, but the inner cover 41 may instead be welded to the output shaft 10. In this case, the inner cover 41 need not have the press-fit portion 43.

In the above embodiment, the outer cover 42 was press-fitted to the output shaft 10, but the outer cover 42 may instead be welded to the output shaft 10. In this case, the outer cover 42 need not have the press-fit portion 47.

In the above embodiment, the inner cover 41 has the outer end portion 45 that is inclined with respect to the extension 44, but it need not have the outer end portion 45. In this case, the extension 44 is preferably extended to a position in contact with the rear projecting portion 20b.

In the above embodiment, the inner peripheral face 20S of the rear projecting portion 20b of the transmission case 20 is parallel to the axial direction, but may be any shape as long as it is unlikely to clash with the inner cover 41. For instance, the inner peripheral face 20S may be wholly or partially recessed.

In the above embodiment, the inner peripheral face 20S of the rear projecting portion 20b of the transmission case 20 is parallel to the axial direction, but may be any shape as long as it is unlikely to clash with the outer cover 42. For instance, the outer peripheral face 20T may be wholly or partially recessed.

### REFERENCE SIGNS LIST

1 wheel loader
9 transmission
10 output shaft
11 rear drive shaft
12 rear axle
14 front drive shaft
15 front axle
20 transmission case
20a case main body
20b rear projecting portion
41 inner cover
43 press-fit portion
44 extension
45 outer end portion
46 inner gap
42 outer cover
47 press-fit portion
48 extension
49 outer end portion
50 outer gap

## Claims

1. A power transmission device, comprising:
a rotary shaft;
a bearing case configured to rotatably support the rotary shaft;
an annular inner cover attached to the rotary shaft and disposed between the rotary shaft and the bearing case in a radial direction of the rotary shaft; and
an annular outer cover attached to the rotary shaft and disposed on an outside of the inner cover in an axial direction.

2. The power transmission device according to Claim 1, wherein
the bearing case has a case body, and an annular projecting portion which projects in the axial direction from the case body,
an outer end portion of the inner cover in the radial direction is adjacent to an inner peripheral face of the projecting portion in the radial direction, and
an outer end portion of the outer cover in the radial direction is adjacent to an outer peripheral face of the projecting portion in the radial direction.

3. The power transmission device according to Claim 2, wherein
the outer end portion of the inner cover in the radial direction is inclined toward an outside in the axial direction closer to the inner peripheral surface of the projecting portion.

4. The power transmission device according to Claim 2 or 3, wherein
a width of a gap between the projecting portion and the inner cover in the radial direction is no more than 1/10 an overall width of the inner cover in the radial direction.

5. The power transmission device according to any of Claims 2 to 4, wherein
the inner peripheral face of the projecting portion in the radial direction is parallel to the axial direction.

6. The power transmission device according to any of Claims 2 to 5, wherein
the projecting portion has an opposing portion which is opposite the outer end portion of the outer cover in the radial direction, and
a width of a gap between the projecting portion and the outer end portion of the outer cover in the radial direction is no more than 1/20 an overall length of the projecting portion in the axial direction.

7. The power transmission device according to any of Claims 2 to 6, wherein
the outer peripheral face of the projecting portion in the radial direction is parallel to the axial direction.
